# EUROPEAN PATENT SPECIFICATION

(11) **EP 3 985 540 B1**
(45) Date of publication and mention of the grant of the patent: **30.08.2023**
(21) Application number: 21202400.4
(22) Date of filing: 13.10.2021
(51) Int. Cl.: G06F 21/62, H04L 9/00

(54) **METHOD AND APPARATUS FOR GENERATING SYNTHETIC DATA**
VERFAHREN UND VORRICHTUNG ZUR ERZEUGUNG SYNTHETISCHER DATEN
PROCÉDÉ ET APPAREIL DE GÉNÉRATION DE DONNÉES SYNTHÉTIQUES

(30) Priority: 13.10.2020 KR 20200132247; 24.06.2021 KR 20210082692
(43) Date of publication of application: 20.04.2022
(73) Proprietor: Samsung SDS Co., Ltd., Seoul 05510 (KR)
(72) Inventor: Kim, Min Jung, Seoul 05510 (KR); Cho, Ji Hoon, Seoul 05510 (KR); Yoon, Hyo Jin, Seoul 05510 (KR); Kim, Young Hyun, Seoul 05510 (KR); Han, Kyoo Hyung, Seoul 05510 (KR)
(74) Representative: Grünecker Patent- und Rechtsanwälte PartG mbB

(56) References cited:
- US-A1- 2015 278 157
- US-A1- 2018 255 023
- US-A1- 2019 340 466
- US-A1- 2020 099 590

## Description

### BACKGROUND

### 1. Field

The following description relates to a technology for generating synthetic data

### 2. Description of Related Art

In data analysis, data combining is a widely used approach to improve the performance of analysis. However, it is virtually impossible for multiple organizations to share data containing personal information with each other and combine the data due to various regulations such as the Personal Information Protection Act, the General Data Protection Regulation (GDPR), and the Health Insurance Portability and Accountability Act (HIPPA). In order to avoid such legal regulations, de-identification techniques are often used, but even de-identified data has an increased risk of exposure after combining. In addition, in the related art, the data privacy protection technology uses encrypted (or protected) data, and thus a problem arises in that a method for satisfying the technology has to be devised according to an analysis query, which may lead to an increased time and complexity of the entire data analysis process.

US 2015/278157 A1 discloses generating anonymous data from web data received from user devices. The web data hereby includes information associated with user devices and content accessed by user devices such as clickstream data, location data, time data, network data etc. In a next step, erroneous or objectionable web data is removed from the web data to generate a subset of the web data, and the subset of the web data is categorized by assigning categories to the subset of the web data. Subsequently, an empirical estimation of the categorized subset of the web data is performed to generate empirical estimations. Further, a simulation is performed of the empirical estimations to generate synthetic data that corresponds to the web data and that removes private information relating to the user devices and users of the user devices. Finally, the synthetic data is output to a user.

US 2020/099590 A1 relates to a privacy-aware model generation for hybrid machine learning systems. In this context, US 2020/099590 A1 further discloses that a remote service receives a machine learning model computation request from a network assurance service executing in a local network. The request includes aggregated metrics for clusters of measurements obtained by the network assurance service from the local network regarding a plurality of devices in the local network. The remote service forms a synthetic training dataset for the model by combining the aggregated metrics from the model computation request with measurements associated with devices in one or more other networks. The remote service trains the machine learning-based model using the synthetic training dataset. Finally, the network assurance service uses the model to analyze performance of the local network.

US 2019/340466 A1 discloses a system and method for generating and processing training data. A computing system is able to identify and distinguish between content data and background data form a small set of data, such as a handful of authentic forms. The computer system subsequently removes unwanted text, noise, or other portions of an image to create an empty, blank, or scrubbed form with no data. The system further generates training examples or synthetic data from this form, which are incorporated into training data. Hereby, the synthetic data is generated into a form and the computer system is able to synthetically generate variations in the original form to simulate variations that exist with expected incoming data.

It is the object of the present invention to provide a method and an apparatus that allow creating synthetic data from original data in an efficient and secure way.

This object is solved by the subject matter of the independent claims.

Preferred embodiments are defined in the dependent claims.

### SUMMARY

Embodiments disclosed in the present disclosure are to provide a method and apparatus for generating synthetic data.

In one general aspect, there is provided an apparatus for generating synthetic data according to an embodiment including: a synthetic data generator configured to generate synthetic data corresponding to combined data obtained by combining original data held by each of a plurality of data providing apparatuses; and a synthetic data provider configured to provide the synthetic data to a data using apparatus.

The synthetic data generator may receive a ciphertext for the original data from each of the plurality of data providing apparatuses, and generate the synthetic data based on the received ciphertext.

The synthetic data generator may decrypt the ciphertext received from each of the plurality of data providing apparatuses in a trusted execution environment (TEE), generate the combined data by combining each original data piece generated through the decryption in the TEE, and generate the synthetic data based on the generated combined data in the TEE.

The ciphertext for the original data may be a ciphertext generated by each of the plurality of data providing apparatuses by using a homomorphic encryption algorithm.

The synthetic data generator may generate a ciphertext for the combined data by using the ciphertext received from each of the plurality of data providing apparatuses in an encrypted state, and generate a ciphertext for the synthetic data by using the ciphertext for the combined data in an encrypted state, and the synthetic data provider may provide the ciphertext for the synthetic data to the data using apparatus.

The synthetic data generator may generate the synthetic data by using a multi-party computation protocol in which the plurality of data providing apparatuses participate.

The synthetic data generator may generate the synthetic data by using a machine learning-based synthetic data generation model.

The synthetic data generation model may be a pre-trained model to generate synthetic data satisfying differential privacy.

In another general aspect, there is provided a method for generating synthetic data, the method including: generating synthetic data corresponding to combined data obtained by combining original data held by each of a plurality of data providing apparatuses; and providing the synthetic data to a data using apparatus.

The generating may include receiving a ciphertext for the original data from each of the plurality of data providing apparatuses, and generating the synthetic data based on the received ciphertext, and generating the synthetic data based on the received ciphertext.

The generating of the synthetic data based on the received ciphertext may include: decrypting the ciphertext received from each of the plurality of data providing apparatuses in a trusted execution environment (TEE); generating the combined data by combining each original data piece generated through the decryption in the TEE; and generating the synthetic data based on the generated combined data in the TEE.

The ciphertext for the original data may be a ciphertext generated by each of the plurality of data providing apparatuses by using a homomorphic encryption algorithm.

The generating of the synthetic data based on the received ciphertext may include: generating a ciphertext for the combined data by using the ciphertext received from each of the plurality of data providing apparatuses in an encrypted state; and generating a ciphertext for the synthetic data by using the ciphertext for the combined data in an encrypted state, and the providing may include providing the ciphertext for the synthetic data to the data using apparatus.

The generating of the synthetic data may include generating the synthetic data by using a multi-party computation protocol in which the plurality of data providing apparatuses participate.

The generating of the synthetic data may include generating the synthetic data by using a machine learning-based synthetic data generation model.

The synthetic data generation model may be a pre-trained model to generate synthetic data satisfying differential privacy.

### BRIEF DESCRIPTION OF THE DRAWINGS

FIG. 1 is a configuration diagram of a data analysis system according to an embodiment.
FIG. 2 is a configuration diagram of an apparatus for generating synthetic data according to an embodiment.
FIG. 3 is a flowchart of a method for generating synthetic data according to an embodiment.
FIG. 4 is a flowchart of a process of generating synthetic data according to an embodiment.
FIG. 5 is a flowchart of a process of generating synthetic data according to another embodiment.
FIG. 6 is a block diagram for exemplarily illustrating a computing environment including a computing device according to an embodiment.

### DETAILED DESCRIPTION

Hereinafter, specific embodiments of the present disclosure will be described with reference to the accompanying drawings. The following detailed description is provided to assist in a comprehensive understanding of the methods, devices and/or systems described herein. However, the detailed description is only for illustrative purposes and the present disclosure is not limited thereto.

In describing the embodiments of the present disclosure, when it is determined that detailed descriptions of known technology related to the present disclosure may unnecessarily obscure the gist of the present disclosure, the detailed descriptions thereof will be omitted. The terms used below are defined in consideration of functions in the present disclosure, but may be changed depending on the customary practice or the intention of a user or operator. Thus, the definitions should be determined based on the overall content of the present specification. The terms used herein are only for describing the embodiments of the present disclosure, and should not be construed as limitative. Unless expressly used otherwise, a singular form includes a plural form. In the present description, the terms "including", "comprising", "having", and the like are used to indicate certain characteristics, numbers, steps, operations, elements, and a portion or combination thereof, but should not be interpreted to preclude one or more other characteristics, numbers, steps, operations, elements, and a portion or combination thereof.

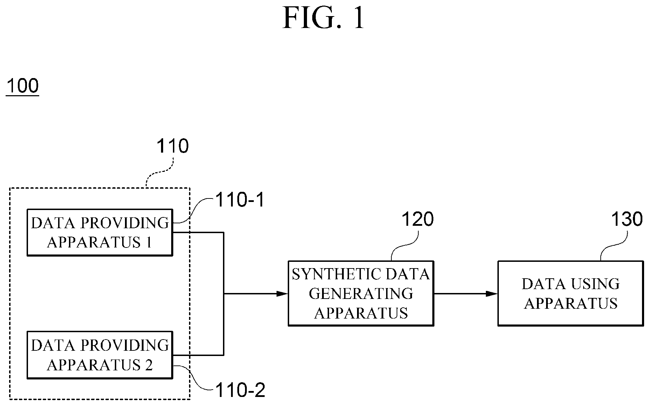

FIG. 1 is a configuration diagram of a data analysis system according to an embodiment.

Referring to FIG. 1, a data analysis service system 100 according to an embodiment includes a plurality of data providing apparatuses 110, an apparatus for generating synthetic data (synthetic data generating apparatus) 120, and a data using apparatus 130.

The plurality of data providing apparatuses 110 are apparatuses each possessing original data to be analyzed by the data using apparatus 130.

In this case, that the data providing apparatus 110 possesses the original data may mean that the data providing apparatus 110 stores the original data in a storage means provided therein, or is able to obtain the original data by accessing an external device storing the original data.

Meanwhile, original data may be data including, for example, sensitive information that is prohibited from disclosure to third parties not authorized by law, such as genetic data, medical records, financial transaction information (for example, account number and bank statement), or personally identifiable information (for example, name and resident registration number), or that is required to be kept confidential according to personal privacy protection and security needs.

Meanwhile, in the embodiment illustrated in FIG. 1, the number of data providing apparatuses 110 is exemplified as two; however, the number of data providing apparatuses 110 is not necessarily limited to the illustrated example, and may be changed according to embodiments.

The synthetic data generating apparatus 120 is an apparatus for generating synthetic data corresponding to combined data obtained by combining original data held by each of a plurality of data providing apparatuses 110 and providing the generated synthetic data to the data using apparatus 130.

According to an embodiment, synthetic data for the combined data means data having the same or similar statistical characteristics as the combined data, and may be generated to satisfy differential privacy according to an embodiment.

The data using apparatus 130 is an apparatus for generating an analysis result for combined data corresponding to the synthetic data by using the synthetic data provided from the synthetic data generating apparatus 120.

According to an embodiment, the analysis result for the combined data may be, for example, a result for various types of data analysis for generating, detecting, or extracting meaningful new information related to the combined data, such as predictive analysis, statistical analysis, classification, or clustering, and is not necessarily limited to a specific type of analysis result.

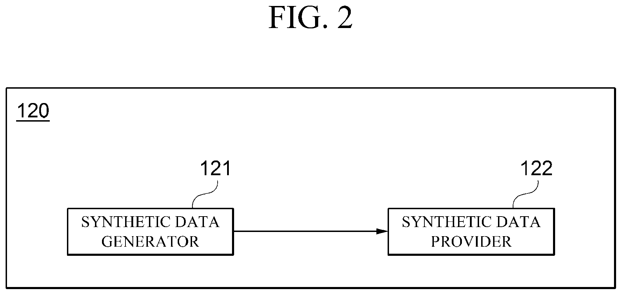

FIG. 2 is a configuration diagram of a synthetic data generating apparatus according to an embodiment.

Referring to FIG. 2, the synthetic data generating apparatus 120 according to an embodiment includes a synthetic data generator 121 and a synthetic data provider 122.

According to an embodiment, the synthetic data generator 121 and the synthetic data provider 122 may be implemented by one or more processors or a combination of one or more processors and software, and may not be clearly distinguished in specific operations, unlike the illustrated example.

The synthetic data generator 121 generates synthetic data corresponding to combined data obtained by combining original data held by each of a plurality of data providing apparatuses 110.

According to an embodiment, the synthetic data generator 121 may receive a ciphertext for the original data held by each of the plurality of data providing apparatuses 110 from each data providing apparatus 110, and may generate synthetic data for the combined data based on the ciphertext received from each data providing apparatus 110.

Specifically, according to an embodiment, the ciphertext received from the plurality of data providing apparatuses 110 may be, for example, a ciphertext encrypted using symmetric key encryption algorithms such as the advanced encryption standard algorithm (AES) and the data encryption standard algorithm (DES), or public key encryption algorithms such as the Rivest, Shamir, Adleman (RSA) algorithm and the ElGamal algorithm.

In this case, each data providing apparatus 110 may encrypt the original data held by the data providing apparatus 110, for example, by using an encryption key shared in advance with the synthetic data generating apparatus 120 using the Diffie-Hellman key exchange protocol or a public key disclosed by the synthetic data generating apparatus 120, and then provide the ciphertext generated through the encryption to the synthetic data generating apparatus 120.

In addition, the synthetic data generator 121 may decrypt the ciphertext received from each data providing apparatus 110 by using the encryption key shared in advance with each data providing apparatus 110 or a private key corresponding to the public key, and then generate combined data by combining each decrypted original data piece.

Meanwhile, according to an embodiment, the synthetic data generator 121 may generate synthetic data for the combined data by using a machine learning-based synthetic data generation model. Specifically, the synthetic data generation model may be, for example, a pre-trained model to generate synthetic data for input data based on an artificial neural network such as a generative adversarial network (GAN). As another example, the synthetic data generation model may be a pre-trained model to generate synthetic data satisfying differential privacy, such as a differential private generative adversarial network (DP-GAN). The synthetic data generator 121 may generate synthetic data for the combined data by using various well-known synthetic data generation techniques in addition to the above-described examples.

Meanwhile, in the above-described embodiment, the synthetic data generator 121 may perform decryption of the ciphertext, generation of combined data, and generation of synthetic data in a trusted execution environment.

According to another embodiment, the ciphertext received from the plurality of data providing apparatuses 110 may be a ciphertext encrypted by using the homomorphic encryption algorithm. In this case, the homomorphic encryption algorithm means an encryption algorithm capable of generating a ciphertext for the result of performing a specific operation on the original data by using the ciphertext for the original data in an encrypted state. Meanwhile, the homomorphic encryption algorithm used to generate the ciphertext for the original data is not necessarily limited to a specific algorithm, and various known homomorphic encryption algorithms may be used in consideration of the type and efficiency of operations to be performed for data combination and synthetic data generation.

Specifically, when a ciphertext encrypted using the homomorphic encryption algorithm is received from each of the plurality of data providing apparatuses 110, the synthetic data generator 121 may generate the ciphertext for the combined data in which the original data corresponding to each ciphertext is combined by combining each received ciphertext in an encrypted state.

In addition, the synthetic data generator 121 may generate a ciphertext for synthetic data corresponding to the combined data by using the generated ciphertext for the combined data in an encrypted state. Specifically, the synthetic data generator 121 may generate the ciphertext for the synthetic data by performing an operation using the combined data generation model by using the ciphertext for the combined data in an encrypted state.

Meanwhile, according to still another embodiment, the synthetic data generator 121 may generate the synthetic data by using a multi-party computation protocol in which the plurality of data providing apparatuses 110 participate. Specifically, the synthetic data generator 121 may generate the synthetic data for the combined data by performing an operation for generating the synthetic data using the combined data generation model through a multi-party computation protocol with each data providing apparatus 110. In this case, the multi-party computation protocol is not necessarily limited to a specific method, and various known multi-party computation methods may be used.

The synthetic data provider 122 provides the synthetic data generated by the synthetic data generator 121 to the data using apparatus 130.

In this case, according to an embodiment, the synthetic data generated by the synthetic data generator 121 may be synthetic data encrypted using the homomorphic encryption algorithm.

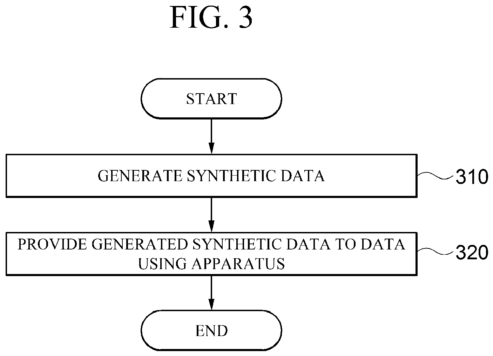

FIG. 3 is a flowchart of a method for generating synthetic data according to an embodiment.

The method illustrated in FIG. 3 may be performed by the synthetic data generating apparatus 120.

Referring to FIG. 3, first, the synthetic data generating apparatus 120 generates synthetic data corresponding to combined data obtained by combining original data held by each of a plurality of data providing apparatuses 110 (310).

In this case, according to an embodiment, the synthetic data generating apparatus 120 may receive a ciphertext for original data from each of the plurality of data providing apparatuses 110, and generate the synthetic data based on the received ciphertext.

Meanwhile, according to another embodiment, the synthetic data generating apparatus 120 may generate the synthetic data by using a multi-party computation protocol in which the plurality of data providing apparatuses 110 participate.

Then, the synthetic data generating apparatus 120 provides the generated synthetic data to the data using apparatus 130 (320).

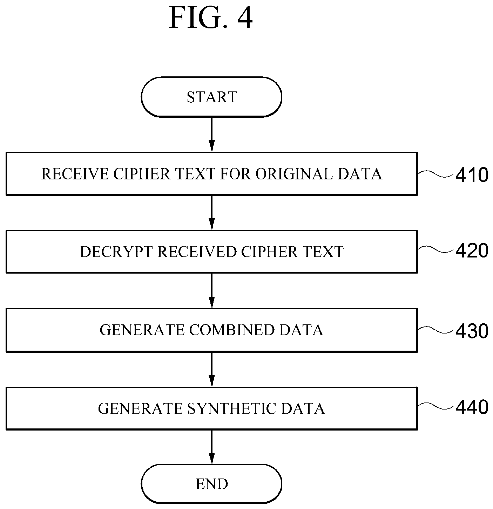

FIG. 4 is a flowchart of a process of generating synthetic data according to an embodiment. This embodiment is not comprised in the scope of the independent claims, and does not constitute part of the invention.

The process illustrated in FIG. 4 may be performed in step 310 illustrated in FIG. 3.

Referring to FIG. 4, first, the synthetic data generating apparatus 120 receives a ciphertext for original data held by each of the plurality of data providing apparatuses 110 from each data providing apparatus 110 (410).

Then, the synthetic data generating apparatus 120 decrypts a ciphertext received from each data providing apparatus 110 in a trusted execution environment (420).

Then, the synthetic data generating apparatus 120 generates combined data by combining each original data piece generated through the decryption in the trusted execution environment (430).

Then, the synthetic data generating apparatus 120 generates synthetic data corresponding to the combined data in the trusted execution environment (440).

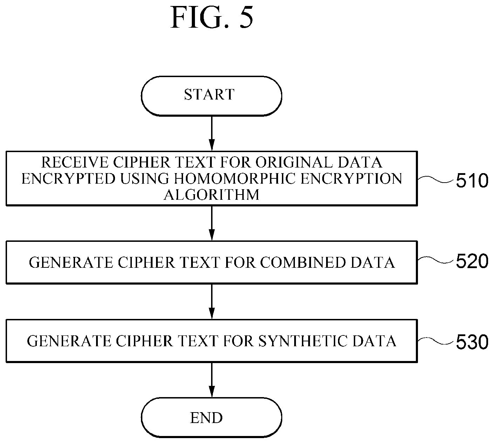

FIG. 5 is a flowchart of a process of generating synthetic data according to another embodiment.

The process illustrated in FIG. 5 may be performed in step 310 illustrated in FIG. 3.

Referring to FIG. 5, first, the synthetic data generating apparatus 120 receives a ciphertext for original data encrypted using the homomorphic encryption algorithm from each of the plurality of data providing apparatuses 110 (510).

Then, the synthetic data generating apparatus 120 generates a ciphertext for combined data in which original data for the ciphertext received from each data providing apparatus 110 is combined, by using each received ciphertext in an encrypted state (520).

Then, the synthetic data generating apparatus 120 generates a ciphertext for synthetic data corresponding to the combined data by using the ciphertext for the combined data in an encrypted state (530).

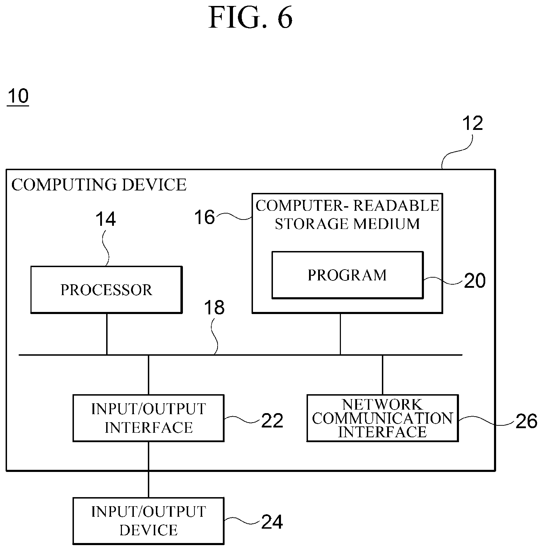

FIG. 6 is a block diagram for exemplarily illustrating a computing environment including a computing device according to an embodiment.

In an embodiment illustrated in FIG. 6, each component may have different functions and capabilities in addition to those described below, and additional components may be included in addition to those described below.

The illustrated computing environment 10 includes a computing device 12. In an embodiment, the computing device 12 may be one or more components included in the synthetic data generating apparatus 120 illustrated in FIG. 2.

The computing device 12 includes at least one processor 14, a computer-readable storage medium 16, and a communication bus 18. The processor 14 may cause the computing device 12 to operate according to the above-described exemplary embodiments. For example, the processor 14 may execute one or more programs stored in the computer-readable storage medium 16. The one or more programs may include one or more computer-executable instructions, which may be configured to cause, when executed by the processor 14, the computing device 12 to perform operations according to the exemplary embodiments.

The computer-readable storage medium 16 is configured to store computer-executable instructions or program codes, program data, and/or other suitable forms of information. A program 20 stored in the computer-readable storage medium 16 includes a set of instructions executable by the processor 14. In an embodiment, the computer-readable storage medium 16 may be a memory (a volatile memory such as a random access memory, a non-volatile memory, or any suitable combination thereof), one or more magnetic disk storage devices, optical disc storage devices, flash memory devices, other types of storage media that are accessible by the computing device 12 and may store desired information, or any suitable combination thereof.

The communication bus 18 interconnects various other components of the computing device 12, including the processor 14 and the computer-readable storage medium 16.

The computing device 12 may also include one or more input/output interfaces 22 that provide an interface for one or more input/output devices 24, and one or more network communication interfaces 26. The input/output interface 22 and the network communication interface 26 are connected to the communication bus 18. The input/output device 24 may be connected to other components of the computing device 12 via the input/output interface 22. The exemplary input/output device 24 may include a pointing device (a mouse, a trackpad, or the like), a keyboard, a touch input device (a touchpad, a touch screen, or the like), a voice or sound input device, input devices such as various types of sensor devices and/or imaging devices, and/or output devices such as a display device, a printer, a speaker, and/or a network card. The exemplary input/output device 24 may be included inside the computing device 12 as a component constituting the computing device 12, or may be connected to the computing device 12 as a separate device distinct from the computing device 12.

According to the disclosed embodiments, original data held by each data providing apparatus is combined in an encrypted (or protected) state under a data privacy protection technology, and thus data sharing between data providing apparatuses may not be required for data combining, and leakage of original data may be prevented.

Furthermore, the combined data is not provided directly to a data user, and instead, synthetic data, which is fake data with similar statistical properties to the combined data, is provided to the data user, and thus both the protection of the original data and the analysis efficiency may be secured.

Although the present disclosure has been described in detail through the representative embodiments as above, those skilled in the art will understand that various modifications may be made thereto. The invention is defined by the appended claims.

## Claims

1. An apparatus (120) for generating synthetic data, the apparatus (120) comprising:
a synthetic data generator (121) configured to generate (310) synthetic data corresponding to combined data obtained by combining original data held by each of a plurality of data providing apparatuses (110, 110-1, 110-2); and
a synthetic data provider (122) configured to provide (320) a ciphertext for the synthetic data to a data using apparatus (130),
**characterized in that** the synthetic data generator (121) is further configured to receive (510) a ciphertext for the original data encrypted using a homomorphic encryption algorithm from each of the plurality of data providing apparatuses (110, 110-1, 110-2) and to generate (520) a ciphertext for the combined data by using the ciphertext received from each of the plurality of data providing apparatuses (110, 110-1, 110-2) in an encrypted state and to generate (530) the ciphertext for the synthetic data by using the ciphertext for the combined data in an encrypted state.

2. The apparatus (120) of claim 1, wherein the synthetic data generator (121) is further configured to generate the synthetic data by using a multi-party computation protocol in which the plurality of data providing apparatuses (110, 110-1, 110-2) participate.

3. A method for generating synthetic data by an apparatus (120), the method comprising:
generating (310) synthetic data corresponding to combined data obtained by combining original data held by each of a plurality of data providing apparatuses (110, 110-1, 110-2); and
providing (320) a ciphertext for the synthetic data to a data using apparatus, **characterized in that** the generating (310) comprises:
receiving (510) a ciphertext for the original data encrypted using a homomorphic encryption algorithm from each of the plurality of data providing apparatuses (110, 110-1, 110-2);
generating (520) a ciphertext for the combined data by using the ciphertext received from each of the plurality of data providing apparatuses 110, 110-1, 110-2) in an encrypted state; and
generating (530) the ciphertext for the synthetic data by using the ciphertext for the combined data in an encrypted state.

4. The method of claim 3, wherein the generating (310) of the synthetic data comprises generating the synthetic data by using a multi-party computation protocol in which the plurality of data providing apparatuses (110, 110-1, 110-2) participate.

## Patentansprüche

1. Vorrichtung (120) zum Erzeugen von synthetischen Daten, wobei die Vorrichtung (120) umfasst:
einen Erzeuger (121) für synthetische Daten, ausgebildet zum Erzeugen (310) von synthetischen Daten entsprechend durch Kombinieren von von jeder einer Vielzahl von Datenbereitstellungsvorrichtungen (110, 110-1, 110-2) gespeicherten Ausgangsdaten erhaltenen kombinierten Daten; und
einen Bereitsteller (122) für synthetische Daten, ausgebildet zum Bereitstellen (320) eines verschlüsselten Textes für die synthetische Daten für eine Datenverwendungsvorrichtung (130),
**dadurch gekennzeichnet, dass** der Erzeuger (121) für synthetische Daten ferner zum Empfangen (510) eines verschlüsselten Textes für die Ausgangsdaten, verschlüsselt unter Verwendung eines homomorphen Verschlüsselungsalgorithmus von jeder der Vielzahl von Datenbereitstellungsvorrichtungen (110, 110-1, 110-2), und zum Erzeugen (520) eines verschlüsselten Textes für die kombinierten Daten durch Verwenden des von jeder der Vielzahl von Datenbereitstellungsvorrichtungen (110, 110-1, 110-2) in einem verschlüsselten Zustand empfangenen verschlüsselten Textes und zum Erzeugen (530) des verschlüsselten Textes für die synthetische Daten durch Verwenden des verschlüsselten Textes für die kombinierten Daten in einem verschlüsselten Zustand ausgebildet ist.

2. Vorrichtung (120) nach Anspruch 1, wobei der Erzeuger (121) für synthetische Daten ferner zum Erzeugen der synthetischen Daten durch Verwendung eines Mehrparteien-Berechnungsprotokolls, an dem die Vielzahl von Datenbereitstellungsvorrichtungen (110, 110-1, 110-2) teilnehmen, ausgebildet ist.

3. Verfahren zum Erzeugen von synthetischen Daten durch eine Vorrichtung (120), wobei das Verfahren umfasst:
Erzeugen (310) von synthetischen Daten entsprechend durch Kombinieren von von jeder einer Vielzahl von Datenbereitstellungsvorrichtungen (110, 110-1, 110-2) gespeicherten Ausgangsdaten erhaltenen kombinierten Daten; und
Bereitstellen (320) eines verschlüsselten Textes für die synthetische Daten für eine Datenverwendungsvorrichtung,
**dadurch gekennzeichnet, dass** das Erzeugen (310) umfasst:
Empfangen (510) eines verschlüsselten Textes für die unter Verwendung eines homomorphen Verschlüsselungsalgorithmus verschlüsselten Ausgangsdaten von jeder der Vielzahl von Datenbereitstellungsvorrichtungen (110, 110-1, 110-2);
Erzeugen (520) eines verschlüsselten Textes für die kombinierten Daten durch Verwenden des von jeder der Vielzahl von Datenbereitstellungsvorrichtungen (110, 110-1, 110-2) in einem verschlüsselten Zustand empfangenen verschlüsselten Textes; und
Erzeugen (530) des verschlüsselten Textes für die synthetischen Daten durch Verwenden des verschlüsselten Textes für die kombinierten Daten in einem verschlüsselten Zustand.

4. Verfahren nach Anspruch 3, wobei das Erzeugen (310) der synthetischen Daten das Erzeugen der synthetischen Daten durch Verwendung eines Mehrparteien-Berechnungsprotokolls, an dem die Vielzahl von Datenbereitstellungsvorrichtungen (110, 110-1, 110-2) teilnehmen, umfasst.

## Revendications

1. Appareil (120) de génération de données synthétiques, l'appareil (120) comprenant :
un générateur de données synthétiques (121) configuré pour générer (310) des données synthétiques correspondant à des données combinées obtenues en combinant des données originales détenues par chacun d'une pluralité d'appareils de fourniture de données (110, 110-1, 110-2) ; et
un fournisseur de données synthétiques (122) configuré pour fournir (320) un texte de chiffrement pour les données synthétiques à un appareil utilisant des données (130),
**caractérisé en ce que** le générateur de données synthétiques (121) est configuré en outre pour recevoir (510) un texte de chiffrement pour les données originales chiffrées au moyen d'un algorithme de chiffrement homomorphe à partir de chacun de la pluralité d'appareils de fourniture de données (110, 110-1, 110-2) et pour générer (520) un texte de chiffrement pour les données combinées en utilisant le texte de chiffrement reçu de chacun de la pluralité d'appareils de fourniture de données (110, 110-1, 110-2) dans un état chiffré et pour générer (530) le texte de chiffrement pour les données synthétiques en utilisant le texte de chiffrement pour les données combinées dans un état chiffré.

2. L'appareil (120) de la revendication 1, dans lequel le générateur de données synthétiques (121) est configuré en outre pour générer les données synthétiques en utilisant un protocole de calcul à partis multiples dans lequel la pluralité d'appareils de fourniture de données (110, 110-1, 110-2) participent.

3. Procédé de génération de données synthétiques par un appareil (120), le procédé comprenant :
une génération (310) de données synthétiques correspondant à des données combinées obtenues en combinant des données originales détenues par chacun d'une pluralité d'appareils de fourniture de données (110, 110-1, 110-2) ; et
une fourniture (320) d'un texte de chiffrement pour les données synthétiques à un appareil utilisant des données,
**caractérisé en ce que** la génération (310) comprend :
une réception (510) d'un texte de chiffrement pour les données originales chiffrées au moyen d'un algorithme de chiffrement homomorphe à partir de chacun de la pluralité d'appareils de fourniture de données (110, 110-1, 110-2) ;
une génération (520) d'un texte de chiffrement pour les données combinées en utilisant le texte de chiffrement reçu de chacun de la pluralité d'appareils de fourniture de données (110, 110-1, 110-2) dans un état chiffré ; et
une génération (530) du texte de chiffrement pour les données synthétiques en utilisant le texte de chiffrement pour les données combinées dans un état chiffré.

4. Le procédé de la revendication 3, dans lequel la génération (310) des données synthétiques comprend une génération des données synthétiques en utilisant un protocole de calcul à partis multiples dans lequel la pluralité d'appareils de fourniture de données (110, 110-1, 110-2) participent.
